# NEW EUROPEAN PATENT SPECIFICATION

(11) **EP 0 335 588 B2**
(45) Date of publication and mention of the opposition decision: **12.07.2000**
(45) Mention of the grant of the patent: 11.11.1992
(21) Application number: 89302900.9
(22) Date of filing: 23.03.1989
(51) Int. Cl.: B60C 9/22, B60C 9/20

(54) **Radial tyre**
Radialer Luftreifen
Pneumatique radial

(30) Priority: 28.03.1988 JP 7503088
(43) Date of publication of application: 04.10.1989
(73) Proprietor: SUMITOMO RUBBER INDUSTRIES LIMITED, Chuo-ku Kobe-shi Hyogo 651 (JP)
(72) Inventor: Kawamura, Kazuhiko, Toyota-shi Aichi-ken (JP)
(74) Representative: Morgan, James Garnet

(56) References cited:
- EP-A- 0 288 609
- WO-A-88/10199
- DE-A- 2 720 409
- GB-A- 1 487 426
- GB-A- 2 003 525
- GB-A- 2 070 526
- GB-A- 2 085 376
- JP-U- 6 115 604
- PATENT ABSTRACTS OF JAPAN, vol. 10, no. 222 (M-504)[2278], 2nd August 1986; & JP-A-61 60 303 (YOKOHAMA RUBBER CO. LTD) 28-03-1986
- KAUTSCHUK+GUMMI KUNSTSTOFFE, vol. 40, no. 2, February 1987, pages 130-135, Heidelberg, DE; E.R. BARRON: "Hybrid tire cords containing kevlar aramid"
- "Fahrwerktechnik: Reifen und Räder", pages 65-67, Vogel-Buchverlag

## Description

The present invention relates to a high speed radial tyre for a passenger car.

Because of recent increases in vehicle performance high speed cars running at over 300 km/h have now been produced. Accordingly, pneumatic tyres having a high durability at such high speeds have become necessary.

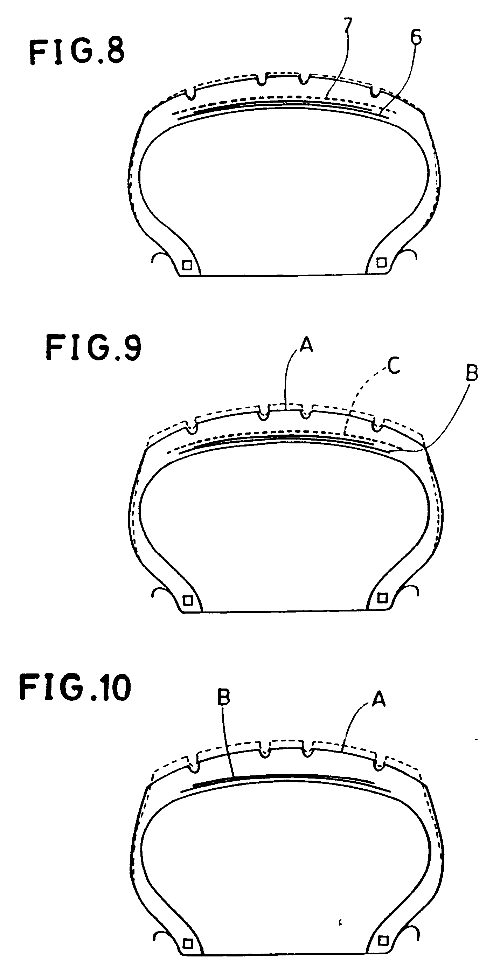

Radial tyres in which carcass cords are arranged in the radial direction of the tyre and a belt is provided composed of steel cords to provide a stiffening hoop effect are known for high speed use. In such radial tyres, however, high speed running generates centrifugal forces at the tread A (see Fig 10) due to the rotation of the tyre. This causes the tread A to swell outwardly and be lifted or displaced in the radial direction as shown by the broken line. This is known as the lifting phenomenon.

The deformation of the tyre caused by this lifting phenomenon promotes vibration of the tyre, and furthermore lift-up of the belt B especially in the edges induces separation of the belt B from the surrounding rubber and the carcass.

This occurs particularly when cut end plies of steel cords are used for the belt B, because there is weakened adhesion to the rubber at the cut ends, and this further increases the separation thereby reducing tyre durability at high speed.

In order to solve such problems the tyre shown in Fig.9 has been prepared in which a band C is provided radially outside the belt B. The conventional band C was formed by low modulus organic fibre cords such as nylon cords. Such bands, however, cannot successfully prevent lifting caused by rotation of the tyre at very high speed as shown by the broken line in Fig.9.

Accordingly, it was suggested to prevent lifting by using high modulus cords such as polyester, rayon, or aromatic polyamide fibre cords for the band C but this had another problem as will now be explained.

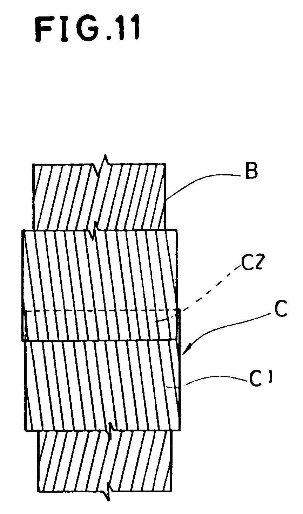

The conventional band C is formed, as shown in Fig.11, by cutting a ply fabric formed by cords C1 cut on the bias so that the cords C1 lie at a small angle with respect to the circumferential direction of the tyre. The ply fabric is then wound around the belt B, and the ends are overlapped at C2 to connect them.

This overlap part C2 spoils the uniformity of the tyre in the circumferential direction and promotes deformation of the tyre at high rotation speeds which consequently further increases vibration of the tyre.

When the band C is formed by polyester fibre cords it cannot fully cope with the lifting in high speed running over 300 km/h, though it does reduce the lifting and improves the high speed durability in comparison with the previous band formed of nylon fibre cords. However, rayon cords have a further difficulty because the stability of supply is not guaranteed because the world volume of production is small. Also deterioration may easily occur due to the invasion of water into the structure because its resistance against water is low.

Other proposals to use ultrahigh modulus filaments such as aromatic polyamide fibres do allow prevention of lifting but in that case the process of producing such tyres with the necessary overlap part C2 at the ends of the cord fabric again adversely affects the uniformity of the tyre and large vibrations are generated in rotation of the tyre in high speed running. Moreover, in the overlap part C2, large strains are generated when the tyre is inflated and rotated, thereby lowering the durability of the tyre.

In order to solve such problems, great efforts have been made, and tyres whose band is formed by winding a single or a plurality of high elastic modulus filaments continuously and spirally around the belt to avoid the overlap joint overlap C2, have been proposed. As a result, vibration was lessened.

However, in the assembly process to spirally wind such high modulus filaments to form a green tyre, it was found that when mounting the raw tyre into the vulcanising mould and applying internal pressure, the essential swelling of the raw tyre by the internal pressure is reduced. This is because, the resistance to stretch of the band C is excessively high and therefore the tyre cannot correctly expand into the mould to give the necessary force to press the tread and structure of the tyre against the inner face of the tyre mould. This makes it impossible to vulcanise and to mould the tyre correctly.
JP-A-6160303 describes a tyre according to the preamble of claim 1.

It is the object of the present invention to provide a pneumatic tyre for high speed passenger cars, in which not only high speed running without vibration of the tyre but also good quality vulcanising and moulding are provided for.

Accordingly the present invention provides a high speed radial passenger car tyre comprising a pair of bead cores one disposed in each bead of the tyre, a toroidal carcass having at least one ply of cords arranged radially of the tyre and turned up at the ends thereof around said bead cores, a tread disposed radially outside the carcass, a belt disposed radially outside the carcass and radially inside the tread and a band disposed radially outside the belt said band comprising a ply composed of at least one cord wound spirally and continuously in the circumferential direction of the tyre at 0 to 3 degrees to the equator of the tyre characterised in that the cord is a hybrid cord comprising a high elastic modulus yarn and a low elastic modulus yarn twisted together, the hybrid cord having a low elastic modulus in a low elastic modulus zone between zero elongation and a predetermined specific elongation in the range of 2-7% and a high elastic modulus in a high elastic modulus zone above said specific elongation of the cord wherein low and high elastic moduli change at a transitional point derived from the load elongation curve of the hybrid cord, being the intersecting point of a line orthogonal to the elongation axis passing through the intersection of the tangent to the elongation curve at zero elongation and the tangent to the elongation curve at the break point.

As stated above, the band radially outside the belt has at least one ply for which at least one hybrid cord is spirally and continuously wound in the circumferential direction of the tyre at 0 to 3 degrees with respect to the tyre equator. Thus the overlapping joint part as used in the prior art conventional tyres is not present which reduces vibration of the tyre at high-speeds of rotation.

As the hybrid cord is formed by twisting together a high elastic modulus yarn and a low elastic modulus yarn, the hybrid cord is reduced in elasticity in comparison with the high elastic modulus yarns alone. As a result, in the vulcanising the moulding steps for the tyre where the vulcanising mould internal pressure expands and shapes the tyre the hybrid cord is stretched and the outer circumferential face of the raw tyre can be fully pressed against the inner face of the vulcanising mould. Thus it becomes easy to vulcanise and to successfully mould the tyre.

Also the high elastic modulus yarn provides the stiff hoop effect in the tread portion of the tyre, prevent lifting at high speeds, inhibiting ply separation, and reducing vibration, thereby improving high speed durability.

Some embodiments of the present invention will now be explained in conjunction with the drawings, in which:-
Fig.1 is a sectional view of an embodiment of the present invention
Fig.2 is a scrap view of a hybrid cord
Fig. 2(b) shows the hybrid cord elongated
Figs. 3.(a), (b) are schematic views showing the initial and elongated states of the high elastic modulus yarns from the cord
Fig.4 is a diagram showing an example of an elongation curve for the hybrid cord

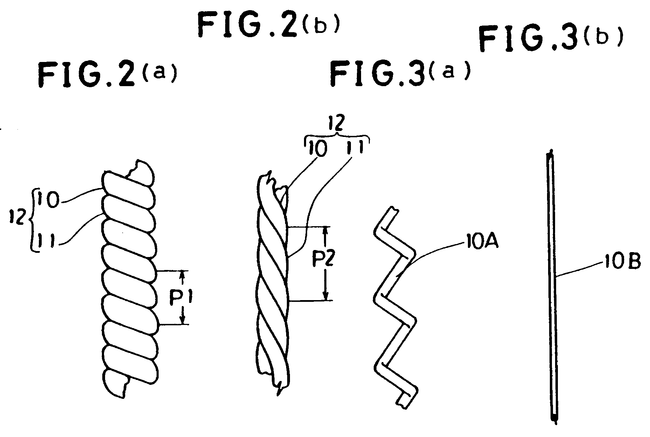

Fig2 5 (a), 6 and 7 are sectional views of other examples of band.
Fig.8 is a sectional view showing the expansion of the tyre according to the invention caused by high speed rotation thereof
Figs 9 and 10 are sectional views showing the expansion of conventional tyres caused by high speed rotation and
Fig. 11 is a view showing the joint or connecting region of a conventional band.

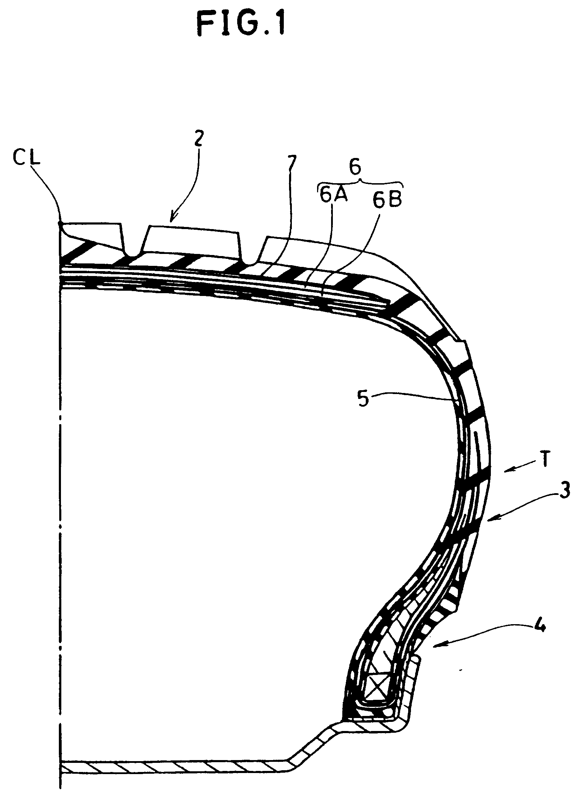

In Fig. 1, a tyre T has a tread portion 2, sidewall portions 3 extending radially inwardly one from each edge of the tread portion and bead portions 4 disposed one at the radially inward end of each sidewall portion. The tyre thus comprises a toroidal carcass 5 which is reinforced by radially arranged cords wrapped at the edge portions around bead cores disposed one in each bead portion 4. A belt 6 is disposed radially outside the carcass 5 in the tread portion 2. On the outer side of the belt 6 in the radial direction, a band 7 is disposed over the full width of the belt 6.

The expression that the carcass cords are arranged radially of the tyre means that they are arranged at 0 to 3 degrees with respect to the radial direction of the tyre.

The belt 6 is composed of two plies 6A and 6B of steel cords. The inner ply 6B is wider than the outer ply 6A and the plies 6A and 6B each have a cut edge structure in which the side edges are not folded.

The cord angles of the two plies 6A and 6B are in a range between 10 and 30 degrees, more preferably between 15 and 23 degrees with respect to the circumferential direction of the tyre, and the outer and inner plies 6A and 6B incline in reverse direction to each other and with respect to the circumferential direction of the tyre.

The reason why plies of cut edge structure are employed is to avoid stress concentration owing to the increased stiffness of the folded back edges if a folded structure is employed thus to avoid separation of the ply edges from the surrounding rubber when flexed.

The plies 6A and 6B of the belt may be either of identical widths or different widths.

For the band cord 7 a high elastic modulus yarn 10 and a low elastic modulus yarn 11 are twisted together to form a hybrid cord 12.

To form the full ply of the band 7 one cord or alternatively a strip of several parallel cords is wound continuously around the outside of the belt 6 as a spiral or a plurality of spirals to form the full width band 7.

The hybrid cord 12 is laid at 0 to 3 degrees with respect to the tyre equator CL.

The hybrid cord 12 can be wound either continuously from one edge to the other edge of the belt 6 in the axial direction of the tyre or interruptedly. As an example it may be interrupted at the tyre equator CL to divide the cord ply of the band 7 into two parts one on either side of the tyre equator CL. Moreover, the band 7 may be divided into a plurality of parts by making interruptions at several points. At such interrupted points it is also possible to change the direction of the spiral winding and/or the cord angle.

As stated above, the hybrid cord 12 can be continued spirally in the circumferential direction of the tyre, while having a plurality of interrupted parts. Here, to "be continued" in the circumferential direction means to be continuous in a length two or more times, more preferably four or more times the circumference.

The high elastic modulus yarn 10 has an elastic modulus of more than 1000 kg/sq.mm, more preferably more than 1500 kg/sq.mm, and may be for example, an aromatic polyamide fibre, all the aromatic polyester fibres, a polyvinyl alcohol fibre whose tensile strength is not more than 15 g/denier, a carbon fibre or the like. The thickness of the yarn is relatively small such as 1000 to 3000 deniers.

For the low elastic modulus yarn 11 which is one having an elastic modulus of not more than 1000 kg/sq.mm and more preferably not more than 700 kg/sq.mm may be used for example, nylon fibre, polyester fibre, vinylon fibre or the like.

The hybrid cord 12 is formed by twisting (ply twist) one or several high elastic modulus yarns 10 in one direction, and twisting (ply twist) one or several low elastic modulus yarns 11 in the same direction, and then twisting (cable twist) the ply twisted high elastic modulus yarn(s) and low elastic modulus yarn(s) together in the reverse direction.

When assembled together the high elastic modulus yarns 10 and/or the low elastic modulus yarns 11, it is possible to ply twist the group of yarns as a lump or separately one by one.

As shown in Fig. 2 a) the hybrid cord 1 may be formed by twisting either a) one high elastic modulus yarn 10 and one low elastic modulus yarn 11, or b) several high elastic modulus yarns and several low elastic modulus yarns or c) one of either yarn and a plurality of the other yarns.

When a tensile force is applied to such a hybrid cord 12, the cord elongates by unwinding or straightening the twist as shown in Fig.2 (b).

This elongation causes an enlargement in the initial twisting pitch P1 of the hybrid cord 12 to pitch P2.

By this elongation, as shown by the model of the high elastic modulus yarn 10 in Figs. 3(a) and 3(b), the high elastic modulus yarn 10A having a coil shape in the initial state becomes a straight yarn 10B. Accordingly, the high elastic modulus yarn 10 then exerts its natural high elastic property. Thus, by winding the high elastic yarn 11 preliminarily in a spiral shape, it becomes possible for the final cord to possess both a low elastic modulus zone where elongation is relatively large because of the spiral state as shown in Fig.3(a) changing to the straightened state of Fig.3(b) and a high elastic modulus zone where the elongation is small under increased load because of the straight yarn state as shown in Fig.3(b). In other words reaching the straightened state shown in Fig.3(b) forms a transitional point in the elongation stress curve. The hybrid cord 12 is constructed so that the transitional point V is located in a range of 2 to 7% of the elongation.

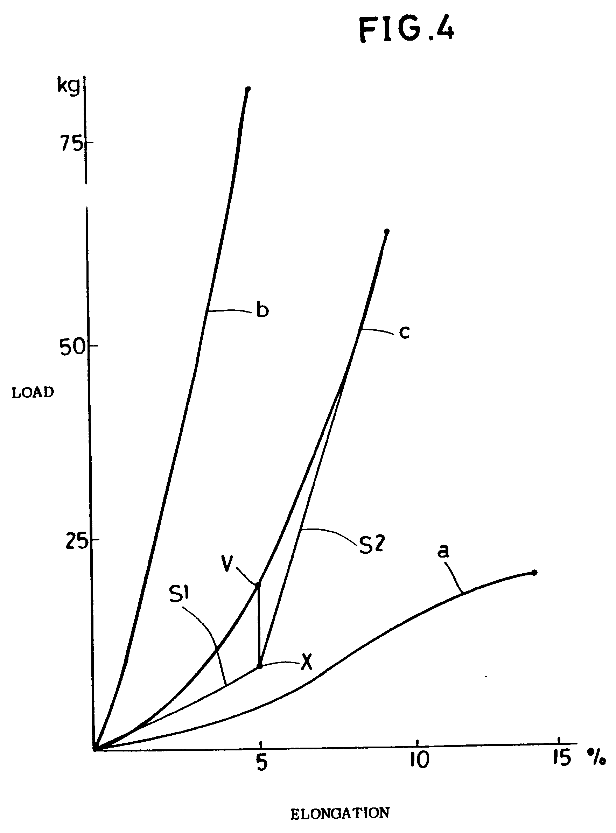

As the hybrid cord 12 is a twinned assembly of the high elastic modulus yarn 10 with the low elastic modulus yarn 11, the torsion of the high elastic modulus yarn 10 and the low elastic modulus yarn 11 still remain when loaded as shown in Fig.2. As a result the transitional point V is not seen so sharply in comparison with the model shown in Figs.3(a) and 3(b). However, the effect is still quite positive. Fig.4 shows an example of the stress elongation curve of a real hybrid cord 12, wherein curve (a) denotes the elongation curve of the low elastic modulus yarn 11 of 1260d nylon, and curve b shows that of the high elastic modulus yarn 10 of 1500d aromatic polyamide. Curve c shows the results for the hybrid cord 12 twisted from two high elastic modulus yarns and a single low elastic modulus yarn 11.

The curve c is betwen the curves a and b and the transitional point V is in the range of 2 to 7% of elongation.

In this invention, the transitional point V in the hybrid cord 12 is defined as the intersecting point of an orthogonal line passing through the intersection X of the tangent S1 to the curve c at zero elongation and the tangent S2 to the curve c at the break point.

Thus the hybrid cord 12 has a high elastic modulus zone from the transitional point V to the break point and a low elastic modulus zone from the origin where the elongation is zero to the transitional point.

It is designed so that the ration EH/EL of the elastic modulus EH in the high elastic modulus zone to the elastic modulus EL in the low elastic modulus zone is in a range of 2 to 10.

Such a hybrid cord is formed by appropriately selecting the diameter, number of pieces, and elastic modulus of each of the high elastic modulus yarns and the low elastic modulus yarn, and also be regulating the twisting conditions such as yarn angles.

It is also possible to regulate by the selection of the drawing process applied to the hybrid cord 12, the high elastic modulus yarn 10, and the low elastic modulus yarn 11.

The fact that the transitional point V exists in the range from 2 to 7% makes it possible to stretch the band 7 utilising the elongation of the hybrid cord 12 when the raw tyre is put into the vulcanising mould and inflated with pressure in the process for manufacturing the tyre. Accordingly, the circumferential surface of the tyre is pressed against the inner face of the mould, and the mould correctly forms the tread pattern in the tread 2.

This swelling of the raw tyre is allowed by the elongation in the low elastic modulus zone of the hybrid cord 12 and that is why the transitional point V is set in the range of 2 to 7% of the elongation.

Further, the elongation at the transitional point V is preferably adjusted to give just enough elongation to inflate the raw tyre in the mould, so that the high elastic modulus zone of the cords then inhibits further expansion of the finished tyre due to tyre inflation and prevents tyre growth due to centrifugal force at high speeds, as shown in Fig. 8. For that purpose, the ratio EH/EL of the elastic modulus EH in the high elastic modulus zone to the elastic modulus EL in the low elastic modulus zone is set between 2 and 10. When below 2, the inhibiting effect is weak, and above 10 is not necessary for the balance of the tyre.

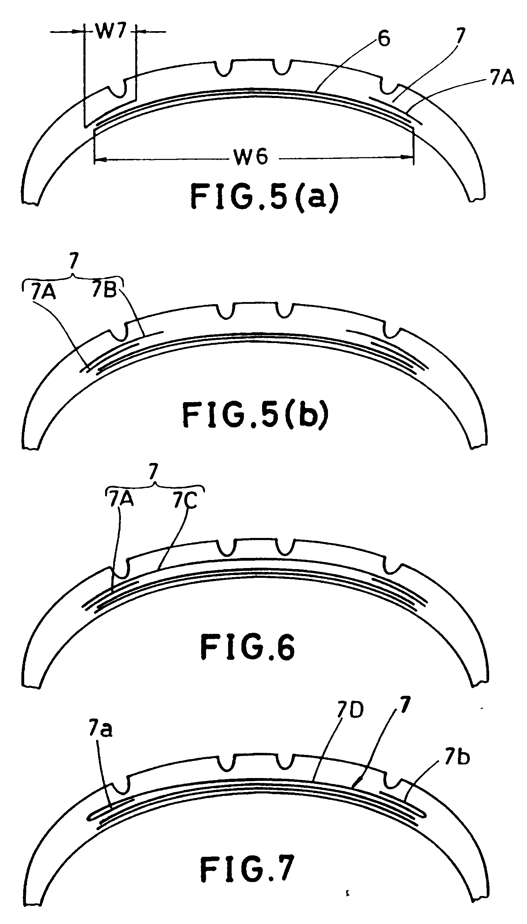

In addition to the band 7 shown in Fig. 1 formed over the full width of the belt 6, it is possible to use, for the band, a narrow shaped ply 7A formed at each edge of the belt 6 as shown in Fig.5 (a). Then the width W7 of the ply 7A should be wider than 10% of the width W6 of the belt 6.

Further, it is possible to use, as the band, two plies 7A and 7B formed at each edge of the belt 6, as shown in Fig. 5(b).

The band 7 can be formed by combining a ply of the hybrid cord 12 and a ply composed only of low elastic modulus filaments 11. In this case, it is possible to form all the plies so they cover the entire width of the belt 6, and also it is possible to form the band by a narrow band ply 7A of one hybrid cord 10 disposed on each edge of the belt and a ply 7C of a low elastic modulus cord covering the upper face of the ply 7A.

Furthermore, as shown in Fig.7 the ply 7D composed of hybrid cord 12 can be provided with folded portions 7a and 7b at the edges thereof, and one of the folded parts 7a and 7b can be folded inwardly in the radial direction and the other outwardly.

As mentioned above, in the present invention, a variety of modifications can be made using the hybrid cord properties and affect.

To illustrate the invention working examples 1 - 4 and comparison or reference 1 - 3 test tyres of size 205/55R16 were produced according to the specifications given in Table 1.

The test tyres had identical basic constructions as shown in Fig. 1 except for the band structures.

The band structures in examples 1 to 4 and references 1 to 3 are schematically shown in Table 1, wherein in order to show the material of the cord, a ply composed of the hybrid cord 12 is shown by a solid line, and a ply composed of only low elastic modulus filaments 11 by a broken line.

Each tyre was mounted on the regular rim and inflated to the regular inner pressure, and the high speed durability and vibration in high speed running were measured.

The high speed durability tests were made using an indoor drum tester. While accelerating to the running speed, the speed at which the tyre was broken was measured as the durability of the tyre. In Table 1, the tyre durabilities are expressed by an index based on the assumption that that of reference 3 is 100. The improvement or the difference from the speed in reference 3 are also shown in Table 1. The vibration tests were also conducted using a drum tester, wherein the vibration generated by high speed rotation was measured through the axle, and expressed by an index obtained by regarding the speed in reference 3 as 100. Smaller values denote better results. It is apparent from the test results that examples 1 - 4 are superior in both high speed durability and vibration to references 1 - 3 and that examples 3, in which the ply is folded over at both edges, produced particularly good results.

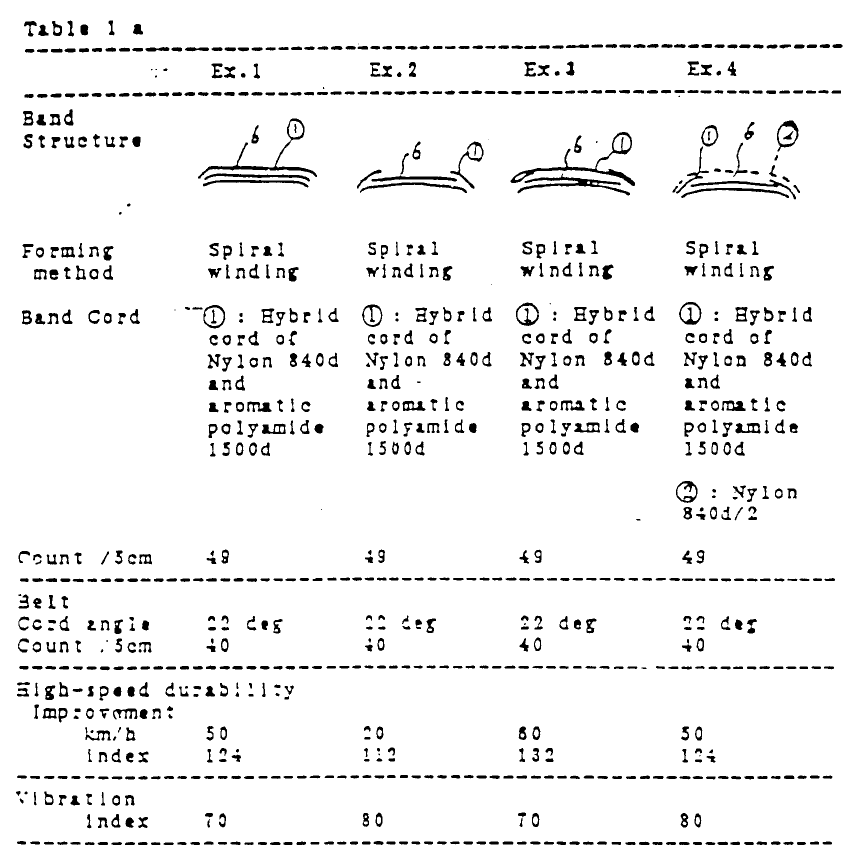

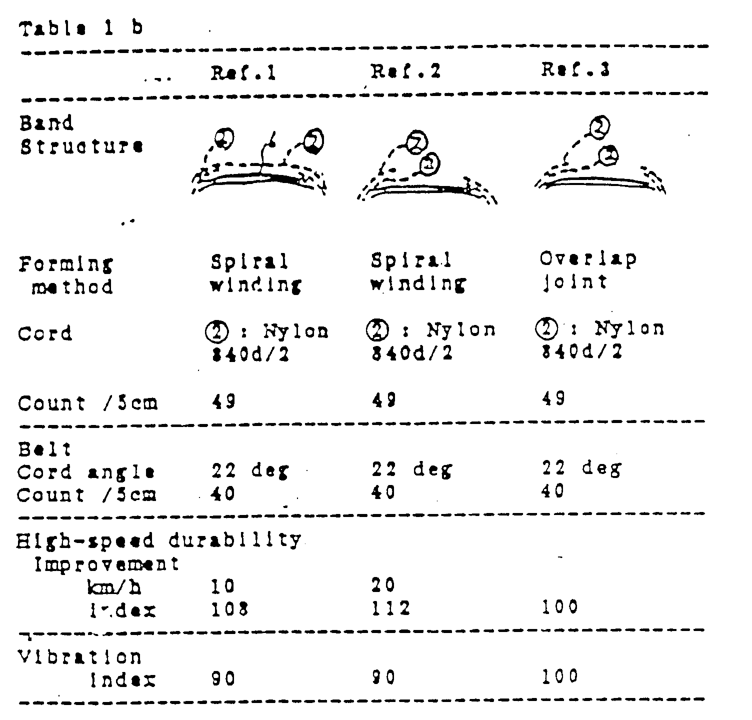

As described above, in the pneumatic tyre of the present invention, the band located radially outside the belt comprises a ply of hybrid cord in which high elastic modulus yarn and low elastic modulus yarns are twisted together. The hybrid cord is spirally wound around the circumference of the belt to form the ply.

As a result the raw tyre in the manufacturing process can be properly pressed against the inner face of the mould by the expansion due to the inflation thereof but in addition in the finished tyre, the high elastic modulus yarns of the band then resists further swelling or lifting in the circumference of the tyre under high speed rotation, and prevents resultant separation of the belt edges from the rubber and carcass. It also reduces vibration.

In addition, the spirally wound hybrid cord forms no overlap part and no joint part as in the conventional band formed by a full width cord fabric, and improves the uniformity of the tyre in the circumferential direction, and reduces the vibration of the tyre.

## Claims

1. A high speed radial passenger car tyre comprising a pair of bead cores one disposed in each bead of the tyre, a toroidal carcass (5) having at least one ply of cords arranged radially of the tyre and turned up at the ends thereof around said bead cores, a tread (2) disposed radially outside the carcass (5), a belt (6) disposed radially outside the carcass (5) and radially inside the tread (2) and a band (7) disposed radially outside the belt (6) said band (7) comprising a ply composed of at least one cord (12) wound spirally and continuously in the circumferential direction of the lyre at 0 to 3 degrees to the equator of the tyre,
characterised in that
the cord is a hybrid cord (12) comprising a high elastic modulus yarn (10) and a low elastic modulus yarn (11) twisted together, the hybrid cord (12) having a low elastic modulus (EL) in a low elastic modulus zone between zero elongation and a predetermined specific elongation in the range of 2-7% and a high elastic modulus (EH) in a high elastic modulus zone above said specific elongation of the cord wherein low and high elastic moduli (EL and EH) change at a transitional point (V) derived from the load elongation curve (C) of the hybrid cord (12) being the intersecting point of a line orthogonal to the elongation axis passing through the intersection (X) of the tangent (S1) to the elongation curve (C) at zero elongation and the tangent (S2) to the elongation curve (C) at the break point.

2. A tyre according to claim 1 characterised in that the high elastic modulus yarn (10) is an aromatic polyamide fibre, a total aromatic polyester fibre, a polyvinyl alcohol fibre having a strength not less than 15 g/denier or a carbon fibre.

3. A tyre according to claim 1 or 2 characterised in that the low elastic modulus yarn (11) is a nylon fibre, a polyester fibre or a Vinylon fibre.

4. A tyre according to any one of claims 1 to 3 characterised in that the hybrid cord (12) is formed by ply twisting one or more high elastic modulus yarns (10) in one direction, and ply twisting one or more low elastic modulus yarns (11) in the same direction, and then cable twisting both the ply twisted filaments together in the reverse direction.

5. A tyre according to claim 4, characterised in that the ratio (EH/EL) of the elastic modulus (EH) in said high elastic modulus zone to the elastic modulus (EL) In said low elastic modulus zone is in the range of 2 to 10.

## Patentansprüche

1. Hochgeschwindigkeits-Radialreifen für einen Personenwagen, umfassend ein Paar Wulstkerne, die je einzeln in jedem Reifenwulst angeordnet sind, eine toroidförmige Karkasse (5) mit mindestens einer Lage radial zum Reifen angeordneter Korde, die an ihren Enden um die Wulstkerne zurückgeschlagen sind, einen radial außerhalb der Karkasse (5) angeordneten Laufstreifen (2), einen radial außerhalb der Karkasse (5) und radial innerhalb des Laufstreifens (2) angeordneten Gürtel (6) und ein außerhalb des Gürtels (6) angeordnetes Band (7), wobei das Band (7) eine Lage umfaßt, die aus mindestens einem spiralförmig und kontinuierlich in Umfangsrichtung des Reifens mit 0 bis 30 zum Reifenäquator gewickelten Kord (12) zusammengesetzt ist,
dadurch gekennzeichnet,
daß der Kord ein Hybridkord (12) ist, der einen Faden (10) mit hohem Elastizitätsmodul und einen Faden (11) mit niedrigem Elastizitätsmodul miteinander verdrillt enthält, wobei der Hybridkord (12) in einer Zone niedrigen Elastizitätsmoduls zwischen Null Längung und einer vorbestimmten spezifischen Längung im Bereich von 2 bis 7% einen niedrigen Elastizitätsmodul (EL) und in einer Zone hohen Elastizitätsmoduls über der spezifischen Längung des Kordes einen hohen Elastizitätsmodul (EH) besitzt und der niedrige und der hohe Elastizitätsmodul (EL und EH) an einem von der Last-Längungs-Kurve (C) des Hybridkords (12) abgeleiteten Übergangspunkt (V) wechseln, der der Schnittpunkt einer senkrecht auf der Längungsachse stehenden Linie durch den Schnittpunkt (X) der Tangente (S1) an die Längungskurve (C) bei Längung Null mit der Tangente (S2) an die Längungskurve (C) an dem Reißpunkt mit der Längungskurve ist.

2. Reifen nach Anspruch 1, dadurch gekennzeichnet, daß der Faden (10) mit hohem Elastizitätsmodul eine Faser aus aromatischem Polyamid, eine totalaromatische Polyesterfaser, eine Polyvinylalkoholfaser mit einer Festigkeit von nicht weniger als 15 g/ Denier oder eine Kohlenstoff-Faser ist.

3. Reifen nach Anspruch 1 oder 2, dadurch gekennzeichnet, daß die Faser (11) mit niedrigem Elastizitätsmodul eine Nylonfaser, eine Polyesterfaser oder eine Vinylonfaser ist.

4. Reifen nach einem der Ansprüche 1 bis 3, dadurch gekennzeichnet, daß der Hybridkord (12) gebildet wird durch Zwirnverdrillung von einem oder mehreren Fäden (10) mit hohem Elastizitätsmodul in einer Richtung und Zwirnverdrillung eines oder mehrerer Fäden (11) mit niedrigem Elastizitätsmodul in der gleichen Richtung und dann einer gemeinsamen Seilverdrillung der beiden zwirnverdrillten Fäden in der Gegenrichtung.

5. Reifen nach Anspruch 4, dadurch gekennzeichnet, daß das Verhältnis (EH/EL) des Elastizitätsmoduls (EH) in der Zone hohen Elastizitätsmoduls zu dem Elastizitätsmodul (EL) in der Zone niedrigen Elastizitätsmoduls im Bereich von 2 bis 10 liegt.

## Revendications

1. Pneumatique haute vitesse à carcasse radiale pour voiture de tourisme, comprenant une paire de tringles disposées chacune dans un talon du pneumatique, une carcasse toroïdale (5) ayant au moins une nappe de câblés disposée radialement par rapport au pneumatique et repliée aux extrémités autour des tringles, une bande de roulement (2) disposée radialement à l'extérieur de la carcasse (5), une ceinture (6) disposée radialement à l'extérieur de la carcasse (5) et radialement à l'intérieur de la bande de roulement (2), et une bande (7) disposée radialement à l'extérieur de la ceinture (6), la bande (7) comprenant une nappe composée d'au moins un câblé (12) enroulé en spirale de façon continue en direction circonférentielle du pneumatique avec un angle de 0 à 3° par rapport à l'équateur du pneumatique, caractérisé en ce que le câblé est un câblé hybride (12) qui comprend un fil (10) de module élevé d'élasticité et un fil (11) de faible module d'élasticité qui sont retordus ensemble, le câblé hybride (12) ayant un module d'élasticité (EL) relativement faible dans une zone à faible module d'élasticité comprise entre un allongement nul et un allongement particulier prédéterminé compris entre 2 et 7%, et un module d'élasticité (EH) de valeur élevée dans une zone de module élevé d'élasticité au-delà de l'allongement particulier du câblé, les modules d'élasticité faible et élevé (EL et EH) changeant à un point de transition (V) dérivé de la courbe charge-allongement (C) du câblé hybride (12), ce point étant le point d'intersection d'une normale à l'axe d'allongement passant par l'intersection (X) de la tangente (S1) de la courbe d'allongement (C) à un allongement nul et de la tangente (S2) à la courbe d'allongement (C) à l'emplacement de rupture.

2. Pneumatique selon la revendication 1, caractérisé en ce que le fil (10) de module élevé d'élasticité est une fibre de polyamide aromatique, une fibre de polyester totalement aromatique, une fibre d'alcool polyvinylique ayant une résistance qui n'est pas inférieure à 0,15N par denier ou une fibre de carbone.

3. Pneumatique selon la revendication 1 ou 2, caractérisé en ce que le fil (11) à faible module d'élasticité est une fibre de "Nylon", une fibre de polyester ou une fibre de "Vinylon".

4. Pneumatique selon l'une quelconque des revendications 1 à 3, caractérisé en ce que le câble hybride (12) est formé par retordage en nappe d'un ou plusieurs fils (10) à module élevé d'élasticité, dans un sens, et un retordage en nappe d'un ou plusieurs fils (11) à faible module d'élasticité dans le même sens, puis par retordage en câblé des fils retordus, dans le sens inverse.

5. Pneumatique selon la revendication 4, caractérisé en ce que le rapport 5EH/EL° du module d'élasticité (EH) dans la zone de module élevé d'élasticité au module d'élasticité (EL) dans la zone à faible module d'élasticité est compris entre 2 et 10.
